# FASCICULE DE BREVET EUROPEEN

(11) **EP 1 711 333 B1**
(45) Date de publication et mention de la délivrance du brevet: **17.09.2008**
(21) Numéro de dépôt: 05726343.6
(22) Date de dépôt: 04.02.2005
(51) Int. Cl.: B29C 67/00

(54) **PROCEDE ET MACHINE POUR REALISER DES OBJETS EN TROIS DIMENSIONS PAR DEPOT DE COUCHES SUCCESSIVES**
VERFAHREN UND MASCHINE ZUR HERSTELLUNG VON DREIDIMENSIONALEN OBJEKTEN DURCH EIN AUFEINANDERFOLGENDES AUFBRINGEN VON SCHICHTEN
METHOD AND MACHINE FOR PRODUCING THREE-DIMENSIONAL OBJECTS BY MEANS OF SUCCESSIVE LAYER DEPOSITION

(30) Priorité: 06.02.2004 FR 0450221
(43) Date de publication de la demande: 18.10.2006
(73) Titulaire: Marsac, Nicolas, F-75018 Paris (FR)
(72) Inventeur: Marsac, Nicolas, F-75018 Paris (FR)
(74) Mandataire: Poulin, Gérard
(86) Numéro de dépôt international: PCT/FR2005/050068
(87) Numéro de publication internationale: WO 2005/075179

(56) Documents cités:
- WO-A-95/05943

## Description

### Domaine de l'invention

L'invention concerne le domaine de la réalisation d'objets en trois dimensions par dépôts de couches successives et plus précisément de modèles. En conséquence, elle concerne également le domaine du « prototypage rapide ». Elle s'applique, entre autres, à la fabrication de modèles demandant une précision de construction importante, comme les modèles de joaillerie, la lunetterie, la connectique, l'aéronautique.

### Art antérieur et problème posé

Dans le cadre de la joaillerie, il est connu de réaliser de s modèles en trois directions par des systèmes dits de « prototypage rapide ». Un de ces types de système est basé sur l'apport de matière thermofusible sur un plateau de travail, mobile selon un axe vertical. Ce type de procédé consiste à déposer un grand nombre de couches successives, d'épaisseurs constantes, ou différentes, dont les aires successives correspondent à l'évolution, selon un axe vertical, de la forme du modèle à réaliser. Il est donc nécessaire de définir un grand nombre de sections de l'objet à réaliser par un découpage successif de plans parallèles, la distance entre chaque section correspondant à l'épaisseur d'une couche. Pour reconstituer l'objet ou le modèle, les sections sont empilées séquentiellement les unes sur les autres. On note qu'il est également connu d'utiliser la conception assister par ordinateur ou les outils de numérisation pour mettre en oeuvre un tel procédé.

Selon les procédés, les matériaux employés peuvent être des liquides thermodurcissables, comme des résines liquides ou des matériaux thermofusibles, tels que les cires. On note qu'une opération de fraisage sur chaque couche déposée est réalisée, afin d'en calibrer l'épaisseur et d'en régulariser la surface supérieure. Une multitude de couches sont ainsi déposées sur la couche précédente.

Dans le cadre de réalisations de modèles d'objets de formes très sophistiquées, il est connu, en joaillerie, de constituer un modèle au moyen d'un grand nombre de deux séries de couches successives constituées chacune de matériaux différents. Un premier matériau est utilisé pour constituer la pièce définitive, un second pour constituer son support. Le matériau support est éliminé par dissolution dans un bain, une fois que le dépôt et la solification des couches successives sont terminées.

D'autre part et en référence à la figure 1, par le brevet européen EP 0 715 573, on connaît un appareil et procédé de réalisation de modèles en trois directions par formation séquentielle d'une multitude de couches les unes sur les autres par dépôt de goutte de matériau de modelage comme defini dans le preambule des revendications 1 et 3. Cet appareil comprend :
- un plateau support 1 pour le modèle à fabriquer, mobile selon un axe vertical ;
- un premier chariot principal 3A mobile selon un axe longitudinal, supportant un chariot secondaire 3B mobile selon un axe transversal au précédent ;
- deux busettes 2 déposant l'une après l'autre, les gouttelettes des deux matériaux, solidaires du chariot secondaire 3B ;
- un troisième chariot « fou » 3C, mobile selon l'axe longitudinal du chariot principal 3A, ou est disposée la fraise 3D destinée à surfacer les couches réalisées, entraîné épisodiquement après chaque couche réalisée, grâce à l'intervention du chariot principal 3A ;
- des moyens de commande gérant les emplacements des ensembles mobiles selon les axes vertical, longitudinal, transversal, et la temporisation de l'éjection des gouttes de matériaux.

La fabrication des modèles, au moyen de ce type d'appareil, déposant les deux types de matériaux l'un après l'autre, est relativement longue, à savoir plusieurs heures, voire plusieurs jours. On éprouve donc le besoin d'accélérer la fabrication de ce type de modèle.

Le but de l'invention est donc proposer un procédé et une machine pouvant fabriquer des modèles plus rapidement.

### Résumé de l'invention

A cet effet, un premier objet principal de l'invention est un procédé de réalisation d'objets en trois dimensions par formation d'un grand nombre de couches parallèles successives, selon une première direction, et constituée chacune de deux matériaux de modelage thermofusibles. Le procédé utilisant les deux étapes principales suivantes :
- une première étape consistant à alimenter en temporisant en un premier matériau de modelage au moins une première busette placée sur un premier poste fixe de travail et à la déplacer à la surface d'un plateau support selon des deuxième et troisième directions perpendiculaires à la première direction et selon un parcours déterminé, pour mettre des gouttes de matériau sur la surface support ; et
- une deuxième étape consistant à effectuer la même opération avec au moins une deuxième busette placée sur un deuxième poste fixe de travail et alimentée en un deuxième matériau selon un autre parcours déterminé,
ce cycle étant renouvelé un nombre suffisant de fois, avec des parcours déterminés en fonction de l'objet, afin de construire l'objet.

Selon l'invention, la surface support étant constitué de 2.N plateaux sur chacun desquels le processus est mis en oeuvre, on déplace chacun des 2.N plateaux alternativement sous un nombre N de postes fixes de travail disposant chacun d'au moins une première busette pour effectuer la première étape, puis sous un même nombre de N de postes fixes de travail disposant chacun d'au moins une deuxième busette pour effectuer la deuxième étape, afin de réaliser simultanément 2.N dépôts de matériau sur les 2.N plateaux, chaque plateau restant dissocié de l'autre quant à sa mobilité selon une direction verticale.

De préférence, un fraisage de surfaçage de la couche déposée est effectué toutes les deux opérations sous un poste fixe de fraisage avec au moins une fraise montée tournante autour d'un axe fixe perpendiculaire à la première direction.

Un deuxième objet principal de l'invention est donc une machine pour réaliser des objets en trois dimensions par formation d'un grand nombre de couches parallèles successives selon une première direction, et constituées chacune de deux matériaux de modelage, sur une surface support et au moyen de deux busettes alimentées, chacune avec un matériau différent à des postes fixes de travail, et mobile par rapport à un chariot principal selon un deuxième direction perpendiculaire à la première direction, le chariot principal étant mobile par rapport au poste de dépôt fixe selon une troisième direction perpendiculaire à la première direction, cette machine mettant en oeuvre les étapes du procédé ci-dessus mentionné.

Selon l'invention, on utilise 2.N postes fixe de travail, la surface support est constituée de 2.N plateaux sur chacun desquels le processus est mis en oeuvre simultanément, les 2.N plateaux étant déplacés en même temps alternativement sous un nombre N de premiers postes fixe s de travail portant chacun au moins une première busette, au moyen du chariot secondaire, mobile pour mettre en oeuvre la première étape et sous un même nombre N de deuxièmes postes fixes de travail portant chacun une au moins deuxième busette au moyen d'un chariot secondaire mobile, pour mettre en oeuvre la deuxième étape, afin de réaliser simultanément 2.N objets.

De préférence, on utilise également un nombre N de postes fixes de fraisage de surfaçage, placés entre deux postes fixes de travail adjacents, une fois sur deux.

La réalisation principale de l'invention prévoit que la surface support est montée tournante autour d'un axe principal parallèle à la première direction, les 2.N plateaux étant espacés angulairement les uns par rapport aux autres d'un pas angulaire de π/N, les 2.N postes fixes de travail étant placés également décalés angulairement de π/N.

Une réalisation particulière de la machine selon l'invention prévoit que N = 1, le pas angulaire étant de 180°, le poste fixe de fraisage étant décalé de 90° par rapport aux postes fixes de travail.

Dans cette dernière réalisation, la surface support est avantageusement portée par une potence montée tournante autour de l'axe principal et portant les deux plateaux opposés.

On complète ce montage avantageusement par l'utilisation d'un codeur angulaire placé à la base de la potence.

L'entraînement en rotation de cette potence peut s'effectuer avantageusement par un moteur électrique et un système d'entraînement à roue/vis sans fin.

L'entraînement des chariots principaux et secondaires se fait avantageusement avec des moteurs linéaires.

### Liste des figures

L'invention et ses différentes réalisations et avantages seront mieux décrites au moyen de la description suivante, accompagnée de plusieurs figures représentant respectivement :
- figure 1, un appareil de réalisation d'un modèle en trois directions selon l'art antérieur ;
- figure 2, en vue cavalière, une réalisation préférentielle de la machine selon l'invention ;
- figures 3A, 3B et 3C, trois vues différentes de la réalisation de la figure 2 ;
- figure 4, une variante de cette même réalisation ; et
- figure 5, un schéma relatif à une réalisation évolutive de la machine selon l'invention.

### Description détaillée de deux réalisations de l'invention

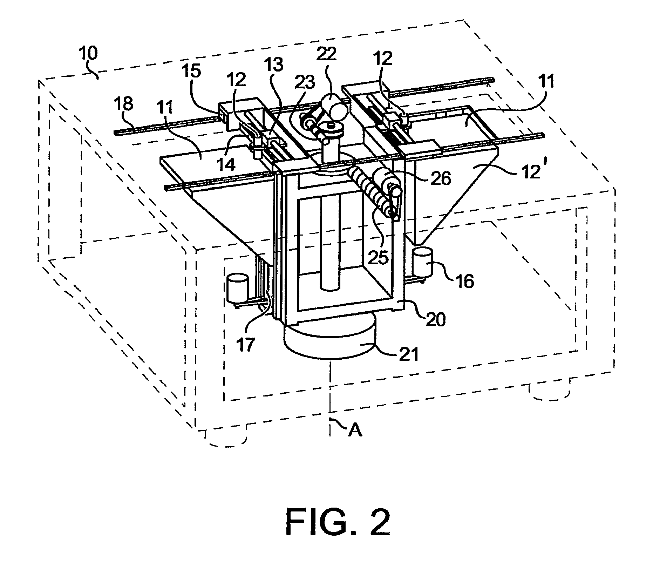

En référence à la figure 2, une réalisation préférentielle de la machine selon l'invention prévoit que, sur un bâti 10 de la machine, deux plateaux 11 de travail soient montés. Ces derniers le sont de manière pivotante autour d'un axe principal A vertical, de manière à pouvoir tourner autour de celui-ci et aller se positionner alternativement sous deux postes de travail symbolisés par les deux groupes d'outillage représentés.

De façon plus précise, une potence 20, constituant une structure porteuse, est montée pivotante autour de l'axe principal A.

Un encodeur 21 se trouve en dessous de la potence 20, de manière à pouvoir contrôler la rotation de celle-ci autour de l'axe principal A. Cette potence 20 supporte deux supports 12 portant eux-mêmes chacun un plateau 11 de travail. Les deux supports 12 sont montés mobiles en translation verticale, parallèles à l'axe principal A au moyen de deux vis mères 17 respectives et entraînées chacune par un moteur 16. Ce mouvement permet une descente progressive de chacun des plateaux 11 après le dépôt d'une couche, lors du processus de fabrication de chaque objet.

Sur chacun de ces plateaux 11, un objet doit donc être construit par dépôt de nombreuses couches successives de deux matériaux thermofusibles, au moyen de deux busettes 12 placées chacune sur un poste de dépôt fixe et diamétralement opposés l'un par rapport à l'autre.

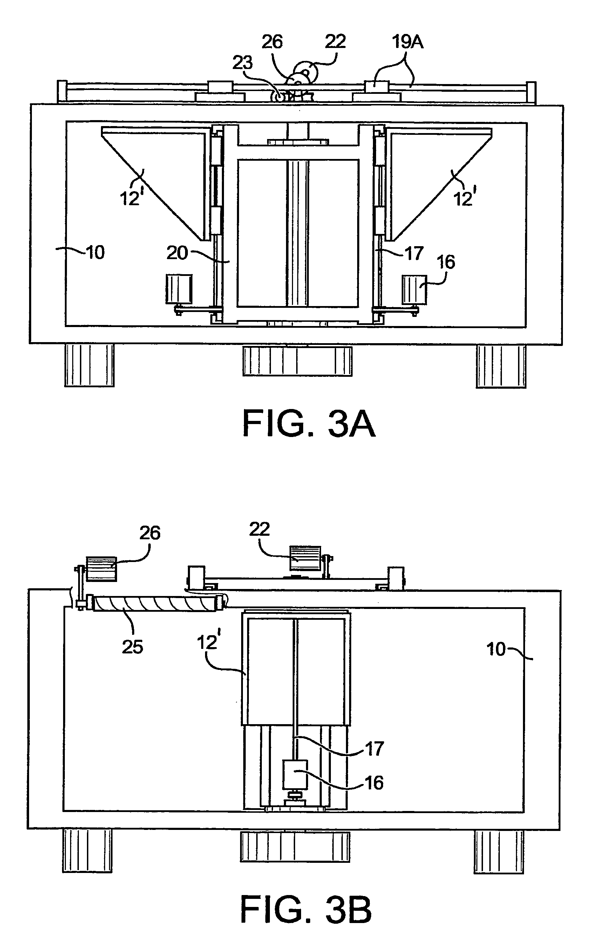

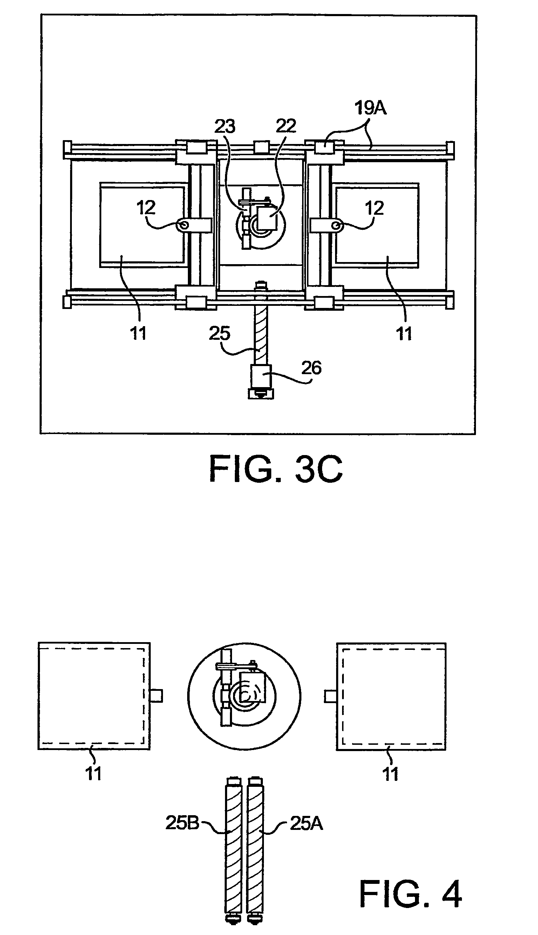

Ces derniers sont constitués d'une paire de rails 18 parallèles sur lesquels est monté mobile, en translation horizontale, un chariot principal 14. Les mouvements de ce dernier suivent donc une deuxième direction perpendiculaire à la première direction symbolisée par l'axe principal A qui est vertical. Sur chacun des chariots principaux 14 est monté mobile en translation un chariot secondaire 13 portant une busette 12. Chaque chariot secondaire 13 est donc mobile en translation horizontale selon une troisième direction perpendiculaire à la deuxième direction schématisée par les chariots principaux 14. Les trois directions de déplacement évoquées sont matérialisées sur les figures 2, 3A, 3B et 3C par trois axes orthogonaux Ox, Oy et Oz. Les chariots respectifs 13 et 14 peuvent être entraînés par l'intermédiaire de systèmes mécaniques conventionnel du type poulie courroie, moteurs pas à pas, mais dans le cas de figure présenté, ils sont entraînés de façon directe grâce à des moteurs linéaires 19A, supprimant de fait les éventuelles erreurs de positionnement lié à l'usure des composants des systèmes de transmissions mécaniques conventionnels. Les déplacements sont contrôlés du fait de l'utilisation de moteur linéaire par des encodeurs linéaires.

Il est ainsi facile de comprendre que chaque busette 12 peut être déplacée sur une surface parallèle à son plateau 11 respectif qui se trouve en dessous d'elle, selon les deuxième et troisième directions, de manière à pouvoir quadriller toute l'aire que représente son plateau 11 correspondant. Une seule busette 12 a été représentée, mais plusieurs busettes 12 peuvent être montées sur un chariot secondaire 13 constituant une tête d'impression.

Selon le procédé de l'invention, on peut ainsi construire simultanément sur chacun des plateaux 11 un objet tel qu'un modèle, au moyen des deux busettes 12 déposant chacune simultanément une couche de matériau thermofusible, tel que de la cire. Une des deux busettes 12 dépose un premier matériau, par exemple une cire, destiné à constituer un modèle final, tandis que l'autre busette 12 dépose un deuxième matériau, en l'occurrence une autre cire, destinée à constituer un support du premier matériau, lors de la construction complète du modèle.

Ainsi, on dépose sur un premier plateau 11 une partie d'une couche avec de la cire modèle, tandis que sur l'autre plateau 11 une autre partie de la couche est déposée avec de la cire support. Lorsque chaque couche est terminée, on procède alors à l'échange des plateaux 11 par rapport aux busettes 12, au moyen d'une rotation de la potence 20.

Il est utile de procéder à un surfaçage des couches de matériau déposé par l'une des deux buses. A cet effet, un poste de fraisage de surfaçage est prévu sur le bâti 10. En effet, une fraise 25 est montée tournante sur un axe fixe horizontalement par rapport au bâti. Sa longueur est égale au côté radial de chaque plateau 11, de manière à pouvoir fraiser une aire équivalente à la totalité de l'aire de chaque plateau 11, lors de la rotation de celui-ci autour de l'axe principal A. Cette fraise est montée à une hauteur réglée pour pouvoir fraiser chaque couche devant être fraisée après son dépôt. L'entraînement en rotation de la fraise 25 se fait par un simple moteur 26. Le sens de rotation de la potence 20 doit impliquer que le plateau 11 disposant du seul dépôt d'un des matériaux, circule à l'opposé de la fraise, et ne subit donc pas de fraisage, seul le plateau disposant des dépôts des deux matériaux subit un surfaçage.

La figure 3A est une vue de face de la machine représentée à la figure 2. On y retrouve les éléments principaux de la structure de cette dernière, à savoir le bâti 10, la potence 20 et les deux supports 12 qui sont montés sur celle-ci. Trois moteurs sont également représentés, à savoir le moteur 16 entraînant la vis mère 17 pour monter et descendre les supports 12, le moteur 22 d'entraînement du système roue/vis sans fin 23 de rotation de la potence et le moteur 26 entraînant la fraise 25.

La figure 3B est une vue de côté de cet ensemble. On y retrouve un support 12', le moteur 16 entraînant la vis mère 17 qui l'entraîne pour sa montée et descente, le moteur 22 d'entraînement de la potence 20 et le moteur 26 entraînant la fraise 25. On constate, sur cette figure 3B que cette fraise 25 a une longueur suffisante pour couvrir tout le côté radial d'un support 12'.

La figure 3C est une vue de dessus de cet ensemble. Elle permet de bien montrer la position de la fraise 25 et du moteur 26 qui l'entraîne, par rapport à la position des plateaux 11 en position de travail. Sur cette figure 3C, les postes fixes de travail sont schématisés par les deux busettes 12.

La figure 4 montre une variante de réalisation de cette machine en ce sens que, au lieu d'une seule fraise 25, comme représentée sur les figures précédentes, deux fraises 25A et 25B sont prévues. En effet, celles-ci sont positionnées l'une à côté de l'autre pour effectuer une opération de fraisage de surfaçage qui est alors prévue en deux passes de profondeur. En effet, on peut imaginer que la profondeur de passe prévue pour une opération de fraisage de surfaçage soit trop importante pour être effectuée avec une seule fraise, pour un matériau déterminé. Les deux fraises 25A et 25B sont alors positionnées à deux hauteurs différentes correspondant à la profondeur de passe effectuée par la première fraise. On note que le nombre de fraises n'est pas limité à deux comme sur l'exemple représenté sur cette figure 4.

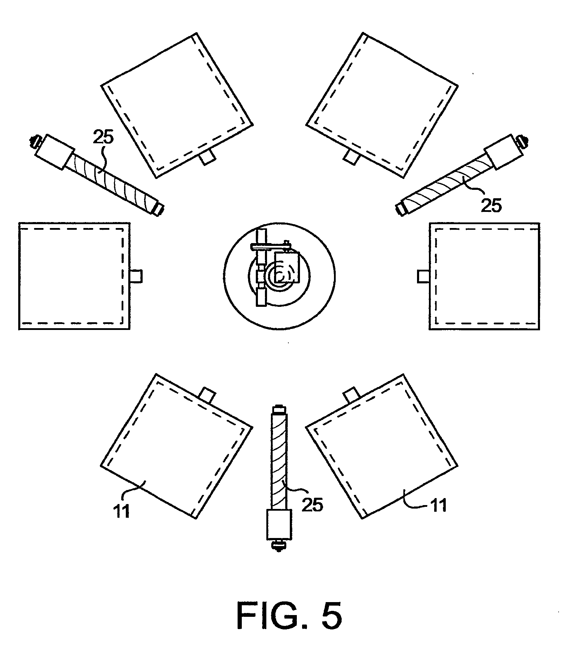

En référence à la figure 5, le nombre de plateaux 11 peut être égal à un nombre pair supérieur à 2. En d'autres termes, le nombre de plateaux utilisés avec le principe selon l'invention est égal à 2.N. Il est donc ainsi possible de fabriquer 2.N objets ou modèles en même temps. En effet, sur cette figure 5, six (2.N avec N = 3) plateaux 11 ont été représentés décalés angulairement les uns par rapport aux autres de 60° (π/N avec N = 3). Conjointement, trois fraises 25 ont été placées décalées angulairement les unes par rapport aux autres de 120°, placées chacune entre deux groupes de deux plateaux 11 adjacents. On conçoit ainsi que, de manière générale, après deux opérations de dépôt de couches successives sur deux postes fixes de travail, un fraisage de surfaçage puisse avoir lieu.

Les deux réalisations décrites dans cette description l'ont été sur la base d'une machine comportant une potence montée tournante et supportant 2.N de plateaux, le bâti de la machine comportant un nombre 2.N de postes fixes de travail. Or, il est possible d'envisager que les plateaux 11 puissent être déplacés au moyen de dispositifs de transport sur un parcours fermé et continu, quelle que soit la forme du parcours.

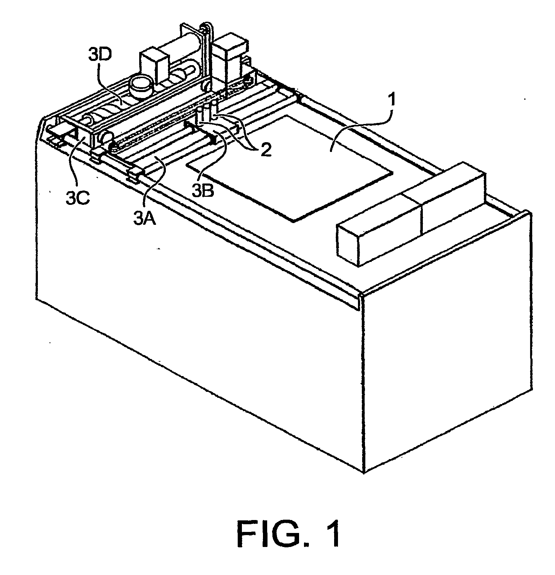

On conçoit ainsi facilement que, au moyen de la machine et du procédé selon l'invention, il est possible de fabriquer dans un temps équivalent au temps de fabrication d'un objet avec d'une machine de l'art antérieur, telle que décrite en regard de la figure 1, un nombre 2.N d'objets, simultanément.

## Revendications

1. Procédé de réalisation d'objets en trois dimensions par formation d'un grand nombre de couches parallèles successives selon une première dimension et constituées chacune de deux matériaux de modelage thermofusibles, le procédé utilisant les deux étapes principales suivantes :
- une première étape consistant à alimenter en temporisant en un premier matériau de modelage une première busette (12) placée sur un premier poste fixe de travail et à la déplacer par rapport à la surface support selon des deuxième et troisième directions perpendiculaires à la première direction et selon un parcours déterminé, pour déposer des gouttes de matériau sur la surface support ;
- une deuxième étape consistant à effectuer la même opération avec une deuxième busette placée sur un deuxième poste fixe de travail et alimentée en un deuxième matériau et déplacée selon un parcours déterminé,
ce cycle étant renouvelé à un nombre suffisant de fois, avec des parcours déterminés, en fonction de l'objet, afin de construire l'objet,
**caractérisé en ce que** le nombre de postes fixes de travail est 2.N, la surface support est constituée de 2.N plateaux (11) sur chacun desquels le processus est mis en oeuvre, on déplace chacun des deux 2.N plateaux (11) alternativement sous au moins une des N premières busettes (12) pour effectuer la première étape, puis sous au moins une des N deuxièmes busettes (12) pour effectuer la deuxième étape, afin de réaliser simultanément 2.N dépôts de matériau sur les 2.N plateaux (11).

2. Procédé selon la revendication 1, **caractérisé en ce qu'**un fraisage de surfaçage de la dernière couche déposée est effectuée toutes les deux opérations sous un poste fixe de fraisage avec au moins une fraise (25, 25A, 25B) montée tournante autour d'un axe fixe perpendiculaire à la première direction.

3. Machine pour réaliser des modèles en trois dimensions par formation d'un grand nombre de couches parallèles successives selon une première direction et constituées chacune de deux matériaux de modelage sur une surface support au moyen d'au moins deux busettes (12) alimentées chacune par un des deux matériaux sur des postes fixes de travail, et mobile par rapport à un chariot principal (14) selon une deuxième direction perpendiculaire à la première direction, le chariot principal (14) étant mobile par rapport au poste de dépôt fixe selon une troisième direction perpendiculaire à la première direction, cette machine mettant en oeuvre les étapes du procédé selon la revendication 1,
**caractérisée en ce que** la surface support est constituée de 2.N plateaux (11) sur chacun desquels le processus est mis en oeuvre simultanément, les 2.N plateaux (11) étant déplacés en même temps, alternativement sous un nombre N de premiers postes de dépôt fixe portant chacun une première busette (12), au moyen d'un chariot secondaire (13) mobile pour mettre en oeuvre la première étape et sous un même nombre N de deuxièmes postes de dépôt fixe portant chacun une deuxième busette (12) au moyen d'un chariot secondaire mobile, pour mettre en oeuvre la deuxième étape, afin de réaliser simultanément 2.N objets.

4. Machine selon la revendication 3, **caractérisée en ce qu'**elle comprend un nombre N de postes fixes de fraisage de surfaçage, placés entre deux postes fixe de dépôt adjacents, une fois sur deux.

5. Machine selon la revendication 3, **caractérisée en ce que** la surface support est montée tournante autour d'un axe principal (A) parallèle à la première direction, les 2.N plateaux (11) étant espacés angulairement les uns par rapport aux autres, d'un pas angulaire de π/N, les 2.N postes de dépôt étant placés également angulairement de π/N.

6. Machine selon la revendication 5, **caractérisée en ce que** le nombre N est égal à 1, le pas angulaire est égal à 180°, le poste fixe de fraisage étant décalé de 90° par rapport aux deux postes fixes de travail.

7. Machine selon la revendication 6, **caractérisée en ce que** la surface support est portée par une potence (20) montée tournante autour de l'axe principal (A) et portant les deux plateaux (11) qui sont opposés.

8. Machine selon la revendication 7, **caractérisée en ce qu'**il comprend un codeur angulaire (21) placé à la base de la potence (20).

9. Machine selon la revendication 8, **caractérisée en ce que** l'entraînement de la potence (20) est effectué par un moteur (22) et un système d'entraînement à roue/vis sans fin (23).

10. Machine selon la revendication 3, **caractérisée en ce que** les chariots principaux (13) et secondaires (14) sont entraînés par des moteurs linéaires.

## Claims

1. Method for producing three-dimensional objects by forming a large number of successive parallel layers in a first dimension and each consisting of two heat-fusible modelling materials, the method using the two following main steps:
- a first step consisting of the timed supply of a first modelling material to at least a first jet (12) positioned on a first fixed working station, and of moving the jet with respect to the supporting surface along second and third directions perpendicular to the first direction and over a determined pathway, to deposit drops of material on the supporting surface; and
- a second step consisting of conducting the same operation with a second jet positioned on a second fixed work station and supplied with a second material over a determined pathway,
this cycle being renewed a sufficient number of times, with pathways determined in relation to the object, in order to construct the object,
**characterized in that** the number of fixed work stations is 2.N, the supporting surface consists of 2.N platforms (11) on each of which the precess is implemented, each of the two 2.N platforms (11) is alternately moved to lie under at least one of the N first jets (12) to conduct the first step, then under at least one of the N second jets (12) to conduct the second step, in order to deposit simultaneously 2.N deposits of material on the 2.N platforms (11).

2. Method as in claim 1, **characterized in that** surface shaving of the last deposited layer is performed after every second operation under a fixed shaving station with at least one shaver (25, 25A, 25B) mounted rotatably about a fixed axis perpendicular to a first direction.

3. Machine for producing three-dimensional models by forming a large number of successive, parallel layers along a first direction and each formed of two modelling materials on a supporting surface by means of at least jets (12) each supplied with one of the two materials at fixed work stations, and mobile with respect to a main carriage (14) along a second direction perpendicular to the first direction, the main carriage (14) being mobile with respect to the fixed depositing station along a third direction perpendicular to the first direction, this machine implementing the steps of the method according to claim 1,
**characterized in that** the supporting surface consists of 2.N platforms (11) on each of which the process is implemented simultaneously, the 2.N platforms (11) being moved at the same time and alternately under a number N of first depositing stations each carrying a first jet (12), by means of a mobile secondary carriage (13) to implement the first step, and under a same number N of second fixed depositing stations each carrying a second jet (12) by means of a mobile secondary carriage, to implement the second step in order to produce 2.N objects simulatenously.

4. Machine as in claim 3, **characterized in that** it comprises a number N of fixed surface shaving stations, positioned every second fixed depositing station between two adjacent depositing stations.

5. Machine as in claim 3, **characterized in that** the supporting surface is mounted rotatably about a main axis (A) parallel to the first direction, the 2.N platforms (11) being spaced at an angle from each other by an angle pitch of π/N, the 2.N depositing stations also being positioned at an angle of π/N.

6. Machine as in claim 5, **characterized in that** the number N equals 1, the angle pitch is 180°, the fixed shaving stations being offset by 90° with respect to the two fixed work stations.

7. Machine as in claim 6, **characterized in that** the supporting surface is carried by a crossbar (20) mounted rotatably about the main axis (A) and carrying two opposite platforms (11).

8. Machine as in claim 7, **characterized in that** it comprises an angle encoder (21) located at the base of the crossbar (20).

9. Machine as in claim 8, **characterized in that** the crossbar (20) is driven by a motor (22) and a wheel/worm screw driving system (23).

10. Machine as in claim 3, **characterized in that** the main (14) and secondary (13) carriages are driven by linear motors.

## Patentansprüche

1. Verfahren zur Herstellung von Objekten in drei Dimensionen durch Bildung einer großen Zahl von parallelen Schichten, die entlang einer ersten Richtung aufeinander folgen und jeweils aus zwei thermisch schmelzbaren Modelliermaterialien zusammengesetzt sind, wobei das Verfahren die zwei folgende Hauptschritte verwendet:
- einen ersten Schritt, der darin besteht, eine erste Düse (12), die auf einer ersten festen Arbeitsstation platziert ist, verzögert mit einem ersten Modelliermaterial zu versorgen, und sie bezüglich der Trägerfläche in zur ersten Richtung orthogonalen zweiten und dritten Richtungen entlang eines vorbestimmten Wegs zu verlagern, um Materialtropfen auf der Trägerfläche aufzubringen;
- einen zweiten Schritt, der darin besteht, die gleiche Operation mit einer zweiten Düse durchzuführen, die auf einer zweiten festen Arbeitsstation platziert ist und mit einem zweiten Material versorgt und entlang eines vorbestimmten Weges verlagert wird,
wobei dieser Zyklus als Funktion des Gegenstands eine ausreichende Zahl von Malen mit vorbestimmten Wegen wiederholt wird, um den Gegenstand zu konstruieren,
**dadurch gekennzeichnet, dass** die Zahl von festen Arbeitsstationen 2.N ist, dass die Trägerfläche durch 2.N Platten (11) gebildet ist, wobei auf jeder von ihnen der Prozess durchgeführt wird, dass man jede der zwei 2.N Platten (11) alternativ unter wenigstens eine der N ersten Düsen (12) verlagert, um den ersten Schritt durchzuführen, dann unter wenigstens eine der N zweiten Düsen (12), um den zweiten Schritt durchzuführen, um gleichzeitig 2.N Materialaufbringungen auf den 2.N Platten (11) zu realisieren.

2. Verfahren nach Anspruch 1, **dadurch gekennzeichnet, dass** ein Oberflächenfräsen der letzten aufgebrachten Schicht alle zwei Operationen auf einer festen Frässtation mit wenigstens einer Fräse (25, 25A, 25B) durchgeführt wird, die um eine feste, zur ersten Richtung orthogonale Achse drehbar montiert ist.

3. Maschine zur Herstellung von Modellen in drei Dimensionen durch Bildung einer großen Zahl von Schichten, die entlang einer ersten Richtung aufeinander folgen und jeweils aus zwei Modelliermaterialien zusammengesetzt sind, auf einer Trägerfläche mit Hilfe von wenigstens zwei Düsen (12), die jeweils auf festen Arbeitsstationen mit einem der zwei Materialien versorgt werden, mit Beweglichkeit bezüglich eines Hauptwagens (14) entlang einer zweiten Richtung, die orthogonal zur ersten Richtung ist, wobei der Hauptwagen (14) bezüglich der festen Aufbringstation entlang einer dritten Richtung beweglich ist, die zur ersten Richtung orthogonal ist, wobei diese Maschine die Schritte des Verfahrens nach Anspruch 1 durchführt, **dadurch gekennzeichnet, dass** die Trägerfläche durch 2.N Platten (11) gebildet ist, wobei auf jeder von ihnen der Prozess gleichzeitig durchgeführt wird, wobei die 2.N Platten (11) gleichzeitig alternativ unter eine Zahl N von ersten festen Aufbringstationen verlagert werden, die jeweils eine erste Düse (12) tragen, und zwar mit Hilfe eines beweglichen Sekundärwagens (13), um den ersten Schritt durchzuführen, und unter eine gleiche Zahl N von zweiten festen Aufbringstationen, die jeweils eine zweite Düse (12) tragen, und zwar mit Hilfe eines beweglichen Sekundärwagens, um den zweiten Schritt durchzuführen, um gleichzeitig 2.N Gegenstände zu realisieren.

4. Maschine nach Anspruch 3, **dadurch gekennzeichnet, dass** sie eine Zahl N von festen Oberflächenfrässtationen umfasst, die jedes zweite Mal zwischen zwei benachbarten festen Aufbringstationen platziert sind.

5. Maschine nach Anspruch 3, **dadurch gekennzeichnet, dass** die Trägerfläche um eine zur ersten Richtung parallele Hauptachse (A) drehbar montiert ist, wobei die 2.N Platten (11) angular um einen angularen Versatz π/N voneinander beabstandet sind, wobei die 2.N Aufbringstationen ebenfalls angular unter π/N platziert sind.

6. Maschine nach Anspruch 5, **dadurch gekennzeichnet, dass** die Zahl N gleich 1 ist, dass der angulare Versatz gleich 180° ist, wobei die feste Frässtation bezüglich der zwei festen Arbeitsstationen um 90° versetzt ist.

7. Maschine nach Anspruch 6, **dadurch gekennzeichnet, dass** die Trägerfläche von einem Ausleger (20) getragen wird, der um die Hauptachse (A) drehbar montiert ist und die zwei Platten (11) trägt, die entgegengesetzt sind.

8. Maschine nach Anspruch 7, **dadurch gekennzeichnet, dass** sie einen Winkelcodierer (21) umfasst, der an der Basis des Auslegers (20) platziert ist.

9. Maschine nach Anspruch 8, **dadurch gekennzeichnet, dass** der Antrieb des Auslegers (20) durch einen Motor (22) und ein Antriebssystem mit einem Endlos-Schneckenrad (23) erfolgt.

10. Maschine nach Anspruch 3, **dadurch gekennzeichnet, dass** der Hauptwagen (13) und der Sekundärwagen (14) durch Linearmotoren angetrieben werden.
